# EUROPEAN PATENT APPLICATION

(11) **EP 2 299 660 A1**
(43) Date of publication of application: **23.03.2011**
(21) Application number: 10799738.9
(22) Date of filing: 01.07.2010
(51) Int. Cl.: H04M 1/00, H04M 1/02

(54) **MOBILE TELEPHONE, MOBILE TELEPHONE CONTROL METHOD AND PROGRAMME**

(30) Priority: 13.07.2009 JP 2009164643
(71) Applicant: Sharp Kabushiki Kaisha, Osaka-shi, Osaka 545-8522 (JP)
(72) Inventor: Sugiyama, Juri, Osaka 545-8522 (JP); Yamagata, Hiromi, Osaka-shi, Osaka 545-8522 (JP)
(74) Representative: Treeby, Philip David William
(86) International application number: PCT/JP2010/061256
(87) International publication number: WO 2011/007679

(57) **Abstract**

A mobile phone (10) includes: a first housing (12) including a first operation section (22) made of a touchscreen; a second housing (14) to which the first housing (12) is slidably connected; a slid state detecting section (27) detecting a transition from a not-slid state in which the first housing (12) is not slid with respect to the second housing (14) to a slid state in which the first housing (12) is slid with respect to the second housing (14); an inputting state detecting section (29) detecting an inputting state in which an operation input is being made at the first operation section (22); a phone network communication section (50) communicating with another phone via a phone network; and a control section (30) invalidating the operation input from the first operation section (22), in a case where (i) the slid state detecting section (27) detects the transition from the not-slid state to the slid state and (ii) the inputting state detecting section (29) detects the inputting state, the transition and the inputting state being detected when the phone network communication section (50) receives an incoming call from another phone.

## Description

### Technical Field

The present invention relates to a slide-type mobile phone including a touchscreen or the like.

### Background Art

Conventionally, slide-type mobile phones have been used. Such a slide-type mobile phone has two housings each of which has an operation section (a section for an operator) made of a touchscreen or keys. One of the two housings is slidably provided on top of the other housing. The slide-type mobile phone is structured such that an upper housing (first housing) including a touchscreen or the like is slid and displaced with respect to a lower housing (second housing), so that the operation section of the second housing is exposed. In many cases, as an operation at the time when a call comes in, the first housing is slid for responding to the incoming call and accepting the incoming call.

For the present invention, the followings are conventional techniques.

Patent Literature 1 discloses an invention according to which, when a call comes in, it is possible to respond to the call by opening a folded foldable housing of a mobile phone.

Patent Literature 2 discloses a communication terminal device capable of allowing a user to have an opportunity to decide whether or not to accept a call. Such an opportunity is given to the user in a configuration in which: when a state of housing is changed from an unextended state (not-slid state) to an extended state (slid state), an on-hook state is kept in a case where the call is made by a caller whose call should be rejected.

Patent Literature 3 discloses a slide-type mobile communication terminal including two housings. This slide-type mobile communication terminal prevents an erroneous operation in a case where a key on a surface of one housing which surface faces a surface of the other housing is accidentally pressed during a sliding motion.

### Citation List

### [Patent Literature]

Patent Literature 1
   Japanese Patent Application Publication, Tokukaihei, No. 1-80145 A (Publication Date: March 27, 1989)
Patent Literature 2
   Japanese Patent Application Publication, Tokukai, No. 2003-101614 A (Publication Date: April 4, 2003)
Patent Literature 3
   Japanese Patent Application Publication, Tokukai, No. 2005-051417 A (Publication Date: February 24, 2005)
Patent Literature 4
   Japanese Patent Application Publication, Tokukai, No. 2008-085968 A (Publication Date: April 10, 2008)

### Summary of Invention

### Technical Problem

A conventional slide-type mobile phone including a touchscreen was not provided with a large touchscreen. Therefore, a first housing could be slid by pushing the first housing with a finger, while the touchscreen was not touched. Accordingly, the problem of an erroneous operation due to an accidental touch by a user on the touchscreen did not occur when the user responded to an incoming call by a sliding operation.

However, in recent years, a size of the touchscreen has been enlarged. In regard to a slide-type mobile phone including a large touchscreen, it is assumed that the first housing is slid by pushing the touchscreen with a finger. As a result, when a user responds to an incoming call in the mobile phone by a sliding operation, the user touches the touchscreen in the sliding operation that is intended only to slide the first housing. Therefore, it is required to prevent erroneous input from occurring due to such a touch in the sliding operation.

The present invention is attained in view of the above problem. An object of the present invention is to realize a slide-type mobile phone employing a touchscreen or the like which slide-type mobile phone is capable of preventing erroneous input at the time when a user slides the touchscreen or the like.

### Solution to Problem

In order to solve the problem above, a mobile phone of the present invention includes: a first housing including a first operation section; a second housing to which the first housing is slidably connected; slid state detecting means detecting a transition from a not-slid state in which the first housing is not slid with respect to the second housing to a slid state in which the first housing is slid with respect to the second housing; inputting state detecting means detecting an inputting state in which an operation input is being made at the first operation section; phone network communication means communicating with another phone via a phone network; and control means invalidating the operation input from the first operation section, in a case where (i) the slid state detecting means detects the transition from the not-slid state to the slid state and (ii) the inputting state detecting means detects the inputting state, the transition and the inputting state being detected when the phone network communication means receives an incoming call from another phone.

A method of the present invention for controlling a mobile phone including a first housing including a first operation section and a second housing to which the first housing is slidably connected, the method includes the steps of: (a) detecting a transition from a not-slid state in which the first housing is not slid with respect to the second housing to a slid state in which the first housing is slid with respect to the second housing; (b) detecting an inputting state in which an operation input is being made at the first operation section; and (c) invalidating the operation input from the first operation section, in a case where (i) the transition from the not-slid state to the slid state is detected in the step (a) and (ii) the inputting state is detected in the step (b), the transition and the inputting state being detected when an incoming call is received from another phone.

According to the above configuration, when an incoming call is received from another phone via a phone network, whether the housings are in the slid state and whether it is in the inputting state in which the input operation to the first operation section is being made are detected. Then, an operation input from the first operation section is invalidated. This makes it possible to prevent an erroneous input from the first operation section at the time when a user pushes the first operation section for sliding the housing in responding to an incoming call in the mobile phone having a slide structure.

Conventionally, in a slide-type mobile phone including a touchscreen, in a state where housings are not slid and a first housing is not pushed up (not-slid state), an operation input from the touchscreen is invalidated. Meanwhile, in a case where the housing is slid and the first housing is pushed up (slid state), the operation input from the touchscreen is made valid. In such a slide-type mobile phone, conventionally, an area of the touchscreen was small. Accordingly, when the first housing including the touchscreen is slid, a user could set the housings in a slid state by pushing with a finger a part of the housing except the touchscreen.

However, by increasing an area of the touchscreen, the touchscreen is configured to cover a large part or an entire part of the housing. In such a case, a user is to slide the housing by pushing with a finger a part of the touchscreen. Accordingly, in a case where a conventional operation invalidation technique for a slide-type mobile phone is applied, an operation input to the touchscreen becomes valid in a state where the first housing is slid and pushed up. In such a case, an erroneous input accidentally occurs due to a sliding operation of the housing by a user.

In order to prevent this, in the present invention, an operation input from the first operation section is invalidated, in a case where the transition to the slid state and the inputting state are detected at the time when an incoming call from another phone is received via the phone network. This prevents an erroneous input from being inputted from the first operation section.

### Advantageous Effects of Invention

A mobile phone of the present invention includes: a first housing including a first operation section; a second housing to which the first housing is slidably connected; slid state detecting means detecting a transition from a not-slid state in which the first housing is not slid with respect to the second housing to a slid state in which the first housing is slid with respect to the second housing; inputting state detecting means detecting an inputting state in which an operation input is being made at the first operation section; phone network communication means communicating with another phone via a phone network; and control means invalidating the operation input from the first operation section, in a case where (i) the slid state detecting means detects the transition from the not-slid state to the slid state and (ii) the inputting state detecting means detects the inputting state, the transition and the inputting state being detected when the phone network communication means receives an incoming call from another phone.

A method of the present invention for controlling a mobile phone including a first housing including a first operation section and a second housing to which the first housing is slidably connected, the method includes the steps of: (a) detecting a transition from a not-slid state in which the first housing is not slid with respect to the second housing to a slid state in which the first housing is slid with respect to the second housing; (b) detecting an inputting state in which an operation input is being made at the first operation section; and (c) invalidating the operation input from the first operation section, in a case where (i) the transition from the not-slid state to the slid state is detected in the step (a) and (ii) the inputting state is detected in the step (b), the transition and the inputting state being detected when an incoming call is received from another phone.

According to the above configuration, it becomes possible to prevent an erroneous input from the first operation section made of a touchscreen from being inputted at the time when a user pushes the first operation section for sliding the housing in responding to an incoming call in the mobile phone having a slide structure.

For a fuller understanding of the nature and advantages of the invention, reference should be made to the ensuing detailed description taken in conjunction with the accompanying drawings.

### Brief Description of Drawings

Fig. 1

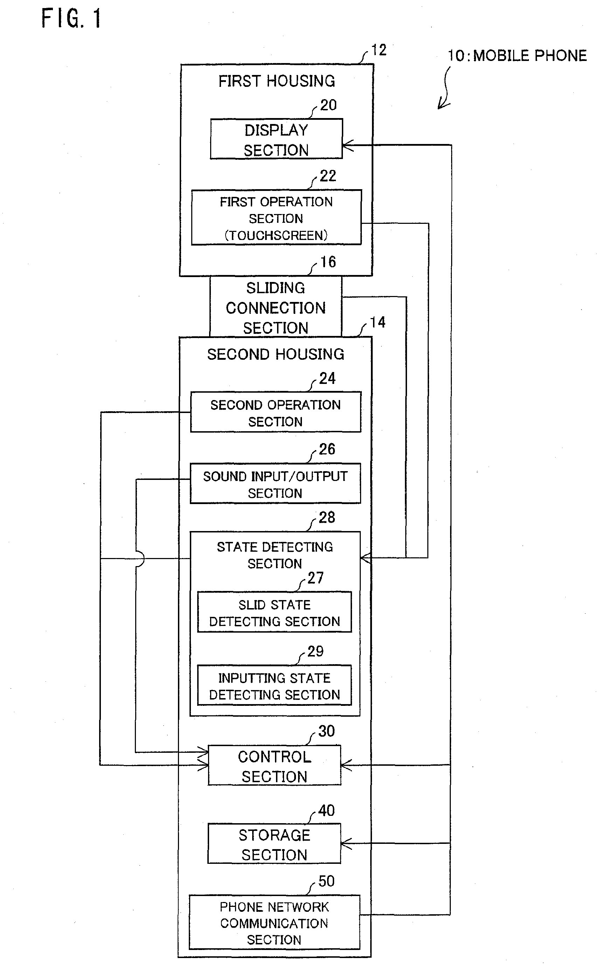

   Fig. 1 is a functional block diagram showing a principal part of a mobile phone according to one embodiment of the present invention.
Fig. 2

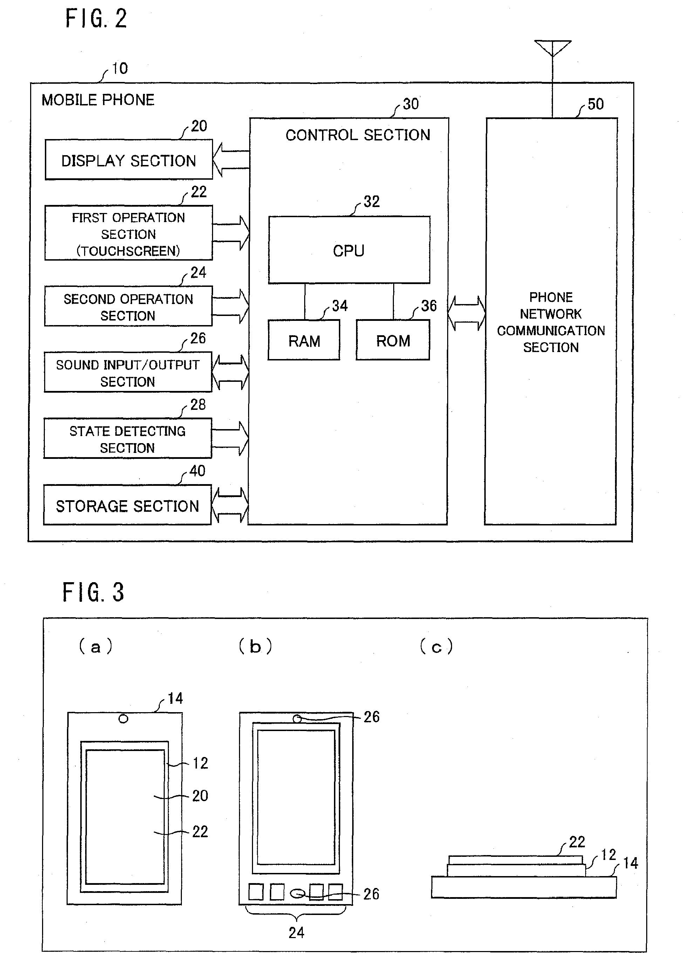

   Fig. 2 is a diagram schematically illustrating one example of a hardware configuration of the mobile phone.
Fig. 3
   Fig. 3 is a diagram showing an appearance of the mobile phone; (a) of Fig. 3 is a diagram showing an appearance in a not-slid state (in a standby mode); (b) of Fig. 3 is a diagram showing an appearance in a slid state (in a call mode); and (c) of Fig. 3 is a side view illustrating the not-slid state (in the standby mode).
Fig. 4

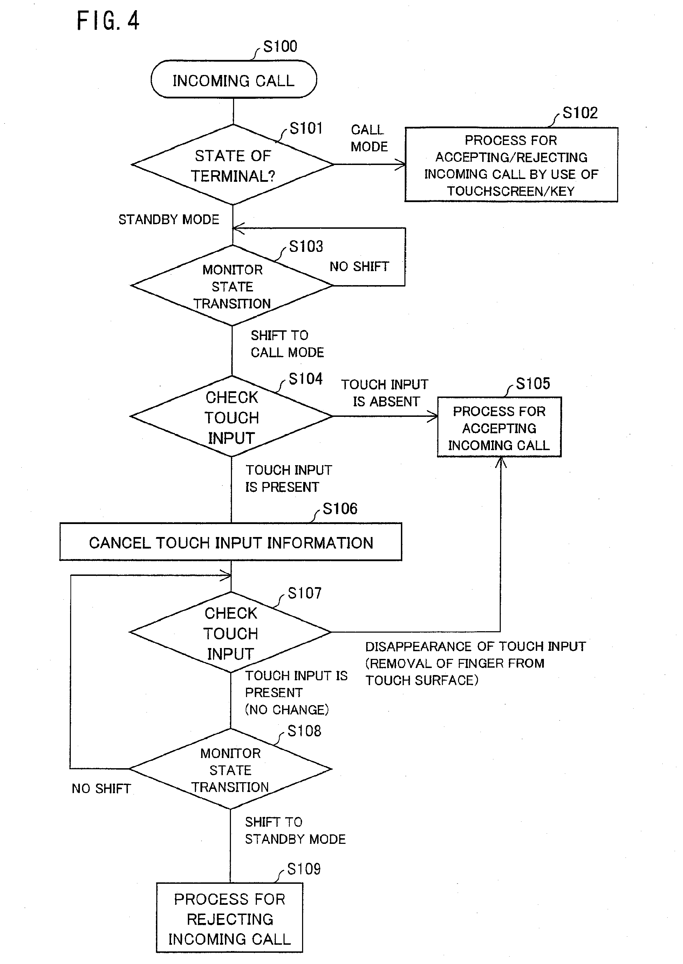

   Fig. 4 is a flowchart showing a flow of a process performed when the mobile phone receives a call.

### Description of Embodiments

The following explains the present invention in more detail by using Examples. However, the present invention is by no means limited by these Examples.

The following describes one embodiment of the present invention with reference to Figs. 1 to 4. Note that the following explanation illustrates an example in a case where a first operation section made of a touchscreen is configured, as shown in Fig. 3, so as to cover a most part of a surface or an entire surface of the first housing. However, a configuration of the present invention is not limited to this configuration. The present invention is effective also to a configuration in which the touchscreen covers only a part of the first housing, if there is any possibility of the occurrence of erroneous input caused by a touch on the touchscreen in a sliding operation in which the first housing is slid by pushing the first housing with a finger. Further, the present embodiment provides an explanation on an assumption that the first operation section is made of a touchscreen. However, in the present invention, an input device provided to the first housing may be any device that may cause unintentional operation input due to a touch of a user on the device in an sliding operation in which the first housing is slid by pushing the first housing with a finger. For example, keys or dials may be provided in place of the touchscreen.

First, with reference to Figs. 1 to 3, the following explains a basic configuration of a mobile phone 10 of the present embodiment. Fig. 1 is a functional block diagram showing a principal part of the mobile phone 10. Fig. 2 is a diagram schematically illustrating one example of a hardware configuration of the mobile phone 10. Fig. 3 is a diagram showing an appearance of the mobile phone 10.

As shown in Fig. 1, the mobile phone 10 includes a first housing 12, a second housing 14 and a sliding connection section 16. The first housing 12 and the second housing 14 are slidably connected to each other via the sliding connection section 16.

The first housing 12 includes a display section 20 and a first operation section 22. The second housing 14 includes a second operation section 24, a sound input/output section 26, a state detecting section (state detecting means) 28, a control section (control means) 30, a storage section 40, and a phone network communication section (phone network communication means) 50. Further, the state detecting section 28 includes a slid state detecting section (slid state detecting means) 27, and an inputting state detecting section (inputting state detecting means) 29. The control section 30 includes a CPU 32, a RAM 34, and a ROM 36 inside the control section 30 (Fig. 2).

Note that an arrangement of functional blocks inside the first housing 12 and the second housing 14 is one example. The sound input/output section 26, the state detecting section 28, the control section 30, the storage section 40 and the phone network communication section 50 only need to be disposed in at least either one of the first housing and the second housing.

As shown in Figs. 1 and 2, the display section 20 is made of a display panel made of liquid crystal elements, organic EL (Elector Luminescence) or the like, and displays various images, data, or the like according to instructions given by the control section 30. The first operation section 22 is made of an operation input device disposed so as to cover the entire display section 20. The operation input device is, for example, a touchscreen through which display contents of the display section 20 is visible. The first operation section 22 inputs an operation input made by a user, into the control section 30 via the state detecting section 28. Note that the display section 20 and the first operation section 22 may be configured as an input/output device in one unit.

The sliding connection section 16 is a connecting member that connects the first housing 12 and the second housing 14 so that the first housing 12 is slidable on the second housing 14. The sliding connection section 16 is made of a combination of rails made of, for example, metal or plastic. The sliding connection section 16 has a function to keep a state in which the first housing 12 is displaced with respect to the second housing 14 (hereinafter, referred to as a "slid state").

Note that, in the following explanation, as illustrated in (a) and (b) of Fig. 3, a short side on a side provided with the second operation section 24 is defined as a lower side. The second operation section 24 is for making an operation input for a talk over the phone. Meanwhile, another short side opposite to the above described short side provided with the second operation section 24 is defined as an upper side, and a state in which the first housing 12 is displaced upward is defined as a slid state. That is, the state of (a) of Fig. 3 shows a not-slid state; (b) of Fig. 3 shows a slid state.

The definition of the slid state may include an intermediate state between the state of (a) of Fig. 3 to the state of (b) of Fig. 3 (a state in which the first housing 12 is displaced even a little from the not-slid state).

Further, for detecting the state in which the first housing 12 is displace with respect to the second housing 14, a magnet and a magnetic sensor (which are not shown) may be provided in a position corresponding to each of a top section and a bottom section. Note that it is possible to use a switch, a contact point, or any of other various sensors in place of the magnet and the magnetic sensor.

The second operation section 24 is an input device disposed on the second housing 14 and made of functional buttons including number (0 to 9) keys, symbol (e.g. # and *) keys, an incoming call key, a hang-up key, a mail key, a cross key, and the like. Further, the second operation section 24 is arranged to be exposed from below the first housing 12 in a state (slid state), as shown in (b) of Fig. 3, in which the first housing 12 is slid and displaced in an upward direction of (b) of Fig. 3. This first housing 12 is provided with the first operation section 22 made of a touchscreen or the like.

Here, in regard to a general slide-type mobile phone, in many cases, the first housing 12 is slid by applying force on an edge of the first housing 12.

However, in a case where the first operation section 22 made of a touchscreen occupies a large area on the first housing 12, it is natural that the touchscreen is touched in sliding one housing on the other hosing. In the mobile phone 10, the second operation section 24 is exposed by displacing one housing with respect to the other housing in a case where a user uses an input device such as number keys other than the touchscreen for making a call or an operation of other function. In such a case, a user needs to touch the touchscreen of the first operation section 22, when the user slides the first housing 12. This is because the mobile phone 10 has a large touchscreen.

Here, an input function of the touchscreen of the mobile phone 10 becomes valid (hereinafter, referred to as an "input state") when the first housing 12 is slid. Therefore, when a call comes in and the first housing 12 is slid for making an operation to accept the call, the input function of the touchscreen of the mobile phone 10 becomes the "input state".

Meanwhile, the mobile phone 10 of the present embodiment invalidates an operation input from the touchscreen as described above for preventing the occurrence of an erroneous input when the first housing 12 is slid for making such an operation. This prevents an erroneous input that occurs due to an "input state", at the time when a call comes in.

The sound input/output section 26 is a sound input/output device made of a microphone or a speaker. The sound input/output section 26 is provided on a backside surface of the mobile phone 10 or in a position that a mouse or an ear touches at the time when a user brings a face close to the mobile phone. Note that the sound input/output section 26 may be a connector or an interface for connection to an external sound input/output device.

The state detecting section 28 detects a state of the sliding connection section 16 and/or the first operation section 22, and input the detected state into the control section 30. More specifically, the slid state detecting section 27 detects whether or not the first housing 12 is in a state (i.e., a slid state) in which the first housing 12 is slid with respect to the second housing 14 and the first housing 12 is pushed upward on the second housing 14.

The input detecting section 29 detects whether or not an input operation from the first operation section 22 is being made. In the slid state, the state detecting section 28 outputs, to the control section 30, an operation input from the first operation section 22. Meanwhile, in a case where the first housing 12 is in a state (i.e., a not-slid state) in which the first housing 12 is not slid with respect to the second housing 14 and the first housing 12 is not pushed upward on the second housing 14, the state detecting section 28 basically does not accept an operation input from the first operation section 22 but invalidates the operation input.

Note that it is possible to provide a function that makes an operation input from the first operation section 22 valid in a case where a predetermined button is pressed, even in the not-slid state.

The control section 30 is a control unit for controlling a function of each section of the mobile phone 10. Inside the control section 30, the CPU 32, the RAM 34, and the ROM 36 are provided (Fig. 2). The control section 30 controls each section of the mobile phone 10 in response to inputs from the first operation section 22, the second operation section 24, the sound input/output section 26, and the state detecting section 28. Further, the control section 30 causes the display section 20 to display a window and causes the storage section 40 to store data, and also makes a telephone communication with another terminal via the phone network communication section 50.

The storage section 40 is a storage device made of, for example, a semiconductor memory or a magnetic storage unit. The storage section 40 stores data such as a control program and a phone book, and information on other users whose call should be rejected.

With reference to Fig. 3, the following explains a sliding structure of the mobile phone 10 of the present embodiment. Fig. 3 is a diagram showing one example of an appearance of the mobile phone 10. (a) of Fig. 3 shows an appearance of the mobile phone 10 in the not-slid state as described above. In the not-slid state, the mobile phone 10 is in an operation state called a standby state. On the other hand, (b) of Fig. 3 shows an appearance of the mobile phone 10 in the slid state. The mobile phone 10 is in an operation state called a call mode in the slid state. Note that (c) of Fig. 3 is a side view of the mobile phone 10 in the not-slid state (standby mode).

In the present embodiment, the standby mode is defined as a state waiting for an incoming call in which state as it is, a talk over a phone is not possible; the call mode is defined as a state in which a talk over a phone via a phone network is possible. The standby mode is a state in which an operation input from each operation section is basically invalidated. In the standby mode, nothing is displayed in the display section 20 and sound such as an alarm sound, an incoming call sound, or the like is outputted from a speaker provided on a backside of the mobile phone 10. The call mode is a state for a call and also is a state in which it is possible to make use of various functions of the mobile phone 10, for example, a talk-over-phone function or a mail transmission function. In the call mode, the display section 20 performs display and an operation input from each operation section is valid.

As shown in the side view of (c) of Fig. 3, the mobile phone 10 is configured such that: the first housing 12 is provided on top of the second housing 14 and connected to the second housing 14 via the sliding connection section 16 (provided inside the first housing 12 or the second housing 14) so that the first housing 12 can be slid on the second housing 14 in right and left directions of (c) of Fig. 3 (in up and down directions of (a) and (b) of Fig. 3). Further, on the first housing 12, the first operation section 22 made of a touchscreen is provided.

As shown in (a) and (b) of Fig. 3, the first operation section 22 made of a touchscreen occupies a most part of an area of the first housing 12. When the first housing 12 is slid, a sliding operation is made by putting a finger on the first operation section 12 made of a touchscreen.

Note that in the present embodiment, a range in which the first housing 12 slides up and down is within an area of the second housing 14. Further, the second operation section 24 of the second housing 14 is provided in a position below the first housing 12 from above which position the first housing 12 is moved by sliding. By sliding the first housing 12 upward, the second operation section 24 is exposed in a state in which an operation can be made by a user on the second operation section 24.

Further, in (b) of Fig. 3, it is arranged such that the second operation section 24 is made of only minimum keys (e.g., an incoming call key, a hang-up key, a hold-on key, a power key, etc.) for realizing basic functions related to a talk over a phone and functions of number keys and other functions are inputted from the first operation section 22 made of a touchscreen. However, the present invention is not limited to this configuration. The second operation section 24 may be provided with number keys, symbol keys and other functional keys.

Note that the mobile phone 10 may be any slide-type mobile phone and is not limited to the example of (a) to (c) of Fig. 3. For example, the first housing 12 may be arranged to slide so as to protrude from an area of the second housing 14. In this case, by the sliding, the mobile phone 10 appears to be extended. Further, the first housing 12 and the second housing 14 may be configured to slide on each other in a circular track by use of at least one rotator, as described in Patent Literature 4.

Next, with reference to Fig. 4, the following explains a flow of a process carried out by the mobile phone 10. Fig. 4 is a flowchart illustrating a flow of a process in a case where a call comes in the mobile phone 10.

A series of the steps is started from a state where a call from another phone comes in via the phone network communication section 50 (S100). When the process is started, the state detecting section 28 determines whether the mobile phone 10 is in a not-slid state (standby mode) or a slid state (call mode) in S101. If the mobile phone 10 is in the call mode, the step proceeds to S102. If the mobile phone 10 is in the standby state, the step proceeds to S103.

In S102, the control section 30 of the mobile phone 10 carries out, in accordance with a current setting of the call mode, a process for accepting an incoming call or a process for rejecting the incoming call which process is made by a user with the use of the touchscreen (first operation section 22) or the keys (the second operation section 24).

In S103, the control section 30 of the mobile phone 10 monitors a state transition from the current standby mode, based on a detection result of a state of housing. This state of housing is detected by the state detecting section 28. In a case where the state does not change (no change in S103), the step returns to S103 and monitoring of a state transition is repeated. Meanwhile, in a case where the state transits to the call mode, that is, in a case where a transition to the slid state is detected, the step proceeds to S104 ("transition to the call mode" in S103).

In the case of the "transition to the call mode", the control section 30 may cause the display section 20 to display a telephone number and the like of a caller of an incoming call. This allows a user to know the caller of the incoming call. Further, in a state where a call comes in in S100, the control section 30 may cause a sub-display (not shown) to display a phone number and the like of the caller of the incoming call.

In S104, the state detecting section 28 of the mobile phone 10 checks a state of an input to the touchscreen of the first operation section 22. In a case where there is no operation input to the touchscreen of the first operation section 22 ("No" in S104), the step proceeds to S105. Meanwhile, in a case where there is an operation input to the first operation section 22 ("Yes" in S104), the step proceeds to S106.

In S105, the control section 30 of the mobile phone 10 causes the phone network communication section 50 to respond to the incoming call because a shift to the call mode, that is, a transition from the not-slid state to the slid state is detected in S103. In other words, as in conventional cases, the control section 30 carries out a process for accepting the call in response to the incoming call. In this process, by sliding the housing at the time when a call comes in, the call is accepted in response to the incoming call. This process is the same as a process carried out by a conventional mobile phone.

In S106, the state detecting section 28 of the mobile phone 10 cancels touch input information checked in S104. That is, in a case where the state detecting section 28 detects a transition of an input from the sliding connection section 16 to the "slid state" ("shift to call mode" in S103) and an operation input from the first operation section 22 is detected ("Yes" in S104), the state detecting section 28 invalidates the operation input from the first operation section 22.

This is because it is highly possible that the input to the first operation section 22 at reception of a call is not an operation input that is intentionally made by a user but the input is caused by an operation for producing the slid state. In a case where the housings are slid on each other, a user applies force by pushing with a finger on an area that can be easily pushed on the touchscreen of the first operation section 22 (e.g., an end section or a section in the vicinity of the center section of the touchscreen) so that the housings are slid due to friction between the finger and a touchscreen surface.

In such a case, the housings shift to the "slid state". As a result, the operation input from the touchscreen becomes valid. Accordingly, the first operation section 22 takes, as an operation input, an input from an area of the touchscreen which area a user touches with the finger for sliding the housings.

In order to solve this problem, in the mobile phone 10, in a case where it is found to be in an "inputting state" in which an operation input is being made with respect to the touchscreen of the first operation section 22 at the time when the housings shift from the "not-slid state" to the "slid state", an operation input to the first operation section 22 is invalidated until the user removes the finger once (S107). This configuration makes it possible to perform a process for accepting an incoming call without receiving, as an erroneous input, an operation input onto the touchscreen caused in sliding of the housings by a user.

In S107, the state detecting section 28 detects whether the mobile phone 10 is in the "inputting state" in which an operation input is being made onto the touchscreen of the first operation section 22 and whether the "inputting state" shifts to the "non-inputting state" in which no operation input is being made. In a case where an operation input is made "Yes (No Change) in S107), the step proceeds to S108. In a case where a state of an operation input shifts to the "non-inputting state" ("disappearance of a touch input (removal of a finger from a touch surface)" in S107), the step proceeds to S105 and processing for accepting an incoming call is performed.

In S108, the state detecting section 28 detects whether or not a state of the housings of the mobile phone 10 has shifted. In a case where the state of the housings of the mobile phone 10 has not shifted from the "slid state" that is the call mode (No Shift in S108), the step returns to S107 and a process to check a state of touch on the touchscreen of the first operation section 22 is performed. In a case where the state of housings of the mobile phone 10 has shifted from the "slid state", i.e., the call mode, to the "not-slid state", i.e., the standby state ("shift to the standby mode" in S108), the step proceeds to S109.

In S109, the control section 30 of the mobile phone 10 causes the phone network communication section 50 to perform a process to reject an incoming call in response to the incoming call. Note that a process to reject an incoming call by a shift of the housings to the "not-slid state" may be, for example, a process to switch to an answering machine, a process to play a message for rejection of an incoming call, or a process to transmit a predetermined mail. That is, such a process to reject an incoming call may be any process as long as the process is arranged not to accept, in response to a call, the call from a caller and to perform a function except a function for accepting the call. Further, it may be arranged to automatically add, to a phone number list, a phone number of a caller making an incoming call.

By repeating the above procedure, the mobile phone 10 performs the series of the steps for responding to an incoming call. This makes it possible to prevent an erroneous input from the first operation section 22 at the time when a user pushes the touchscreen of the first operation section 22 for sliding the first housing 12, in a case where the mobile phone 10 having the slide structure responds to the call.

Note that the present embodiment explains that the mobile phone 10 is configured such that, as shown in (a) and (b) of Fig. 3, the first housing 12 including the first operation section 22 made of a touchscreen is slid in up and down directions with respect to the second housing 14. However, the present invention is not limited to this configuration. The mobile phone 10 may be configured such that the first housing 12 is slid to either right or left or both right and left.

Further, in the present embodiment, the second operation section 24 is configured to include only small number of keys related to a talk over the phone. However, a configuration of the present invention is not limited to this. As the second operation section 24, a full keyboard, that is, a so-called QWERTY keyboard may be employed. The QWERTY keyboard is long sideways. Accordingly, in a case where the QWERTY board is employed, it is preferable to have a configuration as described above in which the first housing 12 is slid to left and right with respect to the second housing 14. Alternatively, the mobile phone 10 may be configured such that: in a configuration where the first housing 12 can be slid in both up and down and left and right directions with respect to the second housing 14, the small number of keys related to making a talk over the phone are provided in a lower section of the second housing 14 (a section that is exposed by sliding the first housing 12 upward) and the QWERTY keyboard is provided along a left-side section or a right-side section of the second housing 14 (a section exposed by sliding the first housing 12 leftward or rightward) so that a long side of the QWERTY keyboard is provided along a long side of the second housing 14.

As described above, a mobile phone 10 of the present embodiment includes: a first housing 12 including a first operation section 22 made of a touchscreen; a second housing 14 to which the first housing 12 is slidably connected; a slid state detecting section 27 detecting a transition from a not-slid state in which the first housing 12 is not slid with respect to the second housing 14 to a slid state in which the first housing 12 is slid with respect to the second housing 14; an inputting state detecting section 29 detecting an inputting state in which an operation input is being made on the touchscreen of the first operation section 22; and a control section 30 invalidating the operation input from the first operation section 22, in a case where (i) the slid state detecting section 27 detects the transition from the not-slid state to the slid state and (ii) the inputting state detecting section 29 detects the inputting state, the transition and the inputting state being detected when a phone network communication section 50 receives an incoming call from another phone.

A control method of the present embodiment, the control method for controlling a mobile phone 10 including a first housing 12 including a first operation section 22 and a second housing 14 to which the first housing 12 is slidably connected, the control method comprising the steps of: (a) detecting a transition from a not-slid state in which the first housing 12 is not slid with respect to the second housing 14 to a slid state in which the first housing 12 is slid with respect to the second housing 14; (b) detecting an inputting state in which an operation input is being made at the first operation section 22; and (c) invalidating the operation input from the first operation section 22, in a case where (i) the transition from the not-slid state to the slid state is detected in the step (a) and (ii) the inputting state is detected in the step (b), the transition and the inputting state being detected when an incoming call is received from another phone.

According to the above configuration, when an incoming call is received from another phone via a phone network, whether the housings are in the slid state and whether the touchscreen is in the inputting state are detected. In a case where (i) a transition to the slid state is detected and (ii) the inputting state is detected, an operation input from the touchscreen of the first operation section 22 is invalidated. This makes it possible to prevent an erroneous input from the first operation section 22 at the time when a user pushes the touchscreen of the first operation section 22 for sliding the housing in responding to an incoming call in the mobile phone 10 having a slide structure.

In the mobile phone 10 described above, the control section 30 causes the phone network communication section 50 to carry out a process for responding to the incoming call, in a case where the inputting state detecting section 29 does not detect the inputting state anymore after the operation input from the touchscreen of the first operation section 22 is invalidated.

In the above configuration, in a case where, when an incoming call is received from another phone, (i) the transition to the slid state is detected and (ii) the inputting state (i.e., a state in which a user slides the housing by pushing the touchscreen) is detected and then (iii) a user removes a finger from the touchscreen, a process for responding to the incoming call is carried out. Such a process includes specifically a process for accepting the call by setting the phone in an off-hook state. In this configuration, even if a user touches any position on the touchscreen in sliding the housing, a process for responding to an incoming call can be reliably carried out at the time when the user removes a finger from the touchscreen.

In the mobile phone 10, the control section 30 causes the phone network communication section 50 to carry out a process for rejecting the incoming call, in a case where the slid state detecting section 27 does not detect the slid state anymore after the operation input from the touchscreen of the first operation section 22 is invalidated.

In the above configuration, in a case where (i) the transition to the slid state is detected and (ii) the inputting state (i.e., a state (a slid state) in which a user slides the housing by pushing the touchscreen) is detected and then (iii) a user sets a state of housings back to a state in which the slid state is undetectable (i.e., the user sets the state of the housings back, by keeping the finger pushing the touchscreen, to a state (the not-slid state) in which the housings are not slid), a process for rejecting a currently incoming call is carried out.

In the above configuration, even if a user touches any position on the touchscreen in sliding the housings, an input to the touchscreen that is being touched can be invalidated. Then, a process for rejecting an incoming call can be reliably carried out at the time when the housings are set back to the original not-slid state. Therefore, a user can check a caller by display of a telephone number and/or sound signaling an incoming call, and consider whether or not to respond to the incoming call while the mobile phone 10 is kept in a slid state. Then, the user can carry out the process for rejecting the incoming call. Therefore, by a simple operation, an incoming call can be rejected and it is possible to return the mobile phone 10 to a normal state (not-slid state) in which the housing is not slid.

Note that a process to reject an incoming call by a shift of the housings to the "not-slid state" may be, for example, a process to switch to an answering machine, a process to play a message for rejection of an incoming call, or a process to transmit a predetermined mail. In other words, such a process to reject an incoming call may be any process as long as the process is arranged not to accept, in response to a call, the call from a caller and to perform a function except a function for accepting the call. Further, it may be arranged to automatically add, to a phone number list, a phone number of a caller making an incoming call.

As described above, a mobile phone of the present invention includes: a first housing including a first operation section; a second housing to which the first housing is slidably connected; slid state detecting means detecting a transition from a not-slid state in which the first housing is not slid with respect to the second housing to a slid state in which the first housing is slid with respect to the second housing; inputting state detecting means detecting an inputting state in which an operation input is being made at the first operation section; phone network communication means communicating with another phone via a phone network; and control means invalidating the operation input from the first operation section, in a case where (i) the slid state detecting means detects the transition from the not-slid state to the slid state and (ii) the inputting state detecting means detects the inputting state, the transition and the inputting state being detected when the phone network communication means receives an incoming call from another phone.

A method of the present invention for controlling a mobile phone including a first housing including a first operation section and a second housing to which the first housing is slidably connected, the method includes the steps of: (a) detecting a transition from a not-slid state in which the first housing is not slid with respect to the second housing to a slid state in which the first housing is slid with respect to the second housing; (b) detecting an inputting state in which an operation input is being made at the first operation section; and (c) invalidating the operation input from the first operation section, in a case where (i) the transition from the not-slid state to the slid state is detected in the step (a) and (ii) the inputting state is detected in the step (b), the transition and the inputting state being detected when an incoming call is received from another phone.

According to the above configuration, when an incoming call is received from another phone via a phone network, whether the housings are in the slid state and whether it is in the inputting state in which the input operation to the first operation section is being made are detected. Then, an operation input from the first operation section is invalidated. This makes it possible to prevent an erroneous input from the first operation section at the time when a user pushes the first operation section for sliding the housing in responding to an incoming call in the mobile phone having a slide structure.

Conventionally, in a slide-type mobile phone including a touchscreen, in a state where housings are not slid and a first housing is not pushed up (not-slid state), an operation input from the touchscreen is invalidated. Meanwhile, in a case where the housing is slid and the first housing is pushed up (slid state), the operation input from the touchscreen is made valid. In such a slide-type mobile phone, conventionally, an area of the touchscreen was small. Accordingly, when the first housing including the touchscreen is slid, a user could set the housings in a slid state by pushing with a finger a part of the housing except the touchscreen.

However, by increasing an area of the touchscreen, the touchscreen is configured to cover a large part or an entire part of the housing. In such a case, a user is to slide the housing by pushing with a finger a part of the touchscreen. Accordingly, in a case where a conventional operation invalidation technique for a slide-type mobile phone is applied, an operation input to the touchscreen becomes valid in a state where the first housing is slid and pushed up. In such a case, an erroneous input accidentally occurs due to a sliding operation of the housing by a user.

In order to prevent this, in the present invention, an operation input from the first operation section is invalidated, in a case where the transition to the slid state and the inputting state are detected at the time when an incoming call from another phone is received via the phone network. This prevents an erroneous input from being inputted from the first operation section.

In the above mobile phone, the control means causes the phone network communication means to carry out a process for responding to the incoming call, in a case where the inputting state detecting means does not detect the inputting state anymore after the operation input from the first operation section is invalidated.

In the above configuration, in a case where, when an incoming call is received from another phone, (i) the transition to the slid state is detected and the (ii) inputting state (i.e., a state in which a user slides the housing by pushing the first operation section by a finger) is detected and then (iii) the user removes the finger from the first operation section, a process for responding to the incoming call is carried out. Such a process includes specifically a process for accepting the call by setting the phone in an off-hook state. In this configuration, even if a user touches any position on the first operation section in sliding the housing, a process for responding to an incoming call can be reliably carried out at the time when the user removes a finger from the first operation section.

In the above mobile phone, the control means causes the phone network communication means to carry out a process for rejecting the incoming call, in a case where the slid state detecting means does not detect the slid state anymore after the operation input from the first operation section is invalidated.

In the above configuration, an incoming call is rejected, in a case where a transition from the slid-state to the not-slid state is detected after invalidation of the operation input from the first operation section. That is, in a case where a user returns the state of housings back to the not-slid state (a state in which the slid state is not detected) by pushing the first operation section with a finger from a state in which the housing is slid by a user by pushing the first operation section with a finger, a process for rejecting acceptance of an incoming call from a caller currently making the incoming call is carried out.

In the above configuration, even if a user touches any position on the first operation section in sliding the housings, an input to the first operation section that is being touched can be invalidated. Then, a process for rejecting an incoming call can be reliably carried out at the time when the housings are set back to the original not-slid state. Therefore, a user can check a caller by display of a telephone number and/or sound signaling an incoming call, and consider whether or not to respond to the incoming call while the housings is kept in a slid state. Then, the user can carry out the process for rejecting the incoming call. Therefore, by a simple operation, an incoming call can be rejected and it is possible to return the housings to a normal state (not-slid state) in which the housing is not slid.

Note that a process to reject an incoming call by a shift of the housings to the "not-slid state" may be, for example, a process to switch to an answering machine, a process to play a message for rejection of an incoming call, or a process to transmit a predetermined mail. In other words, such a process to reject an incoming call may be any process as long as the process is arranged not to accept, in response to a call, the call from a caller and to perform a function except a function for accepting the call. Further, it may be arranged to automatically add, to a phone number list, a phone number of a caller making an incoming call.

Note that the mobile phone may be realized by a computer. In such a case, the scope of the present invention encompasses a control program of the mobile phone for causing the computer to function as each means described above and thereby realizing the mobile phone by the computer, and a computer-readable storage medium storing the program.

In the above embodiments, each block, in particular, the state detecting section 28 and the control section 30 of the mobile phone 10 may be constituted by hardware logic or realized by software by using a CPU.

In other words, the mobile phone 10 includes a CPU (central processing unit) that executes the order of a control program for realizing functions, a ROM (read only memory) that stores the control program, a RAM (random access memory) that develops the control program in an executable form, and a storage device (storage medium), such as memory, that stores the control program and various types of data therein. The object of the present invention can be achieved by a predetermined storage medium. The storage medium stores, in a computer-readable manner, program codes (executable code program, intermediate code program, and source program) of the control program of the mobile phone 10, which is software for realizing the aforesaid functions. The storage medium is provided to the mobile phone 10. With this arrangement, the mobile phone 10 (alternatively, CPU or MPU) as a computer reads out and executes the program code stored in the storage medium provided.

The storage medium may be: tape based, such as a magnetic tape or a cassette tape; disc based, such as a magnetic disk including a floppy® disc and a hard disk, and an optical disk including a CD-ROM, an MO, an MD, a DVD, and a CD-R; card based, such as an IC card (including a memory card) and an optical card; or a semiconductor memory, such as a mask ROM, an EPROM, an EEPROM, and a flash ROM.

Further, the mobile phone 10 may be arranged so as to be connectable to a communications network so that the program code is supplied to each of the image forming apparatus 100 and the fixing device 30 or 30b through the communications network. The communications network is not to be particularly limited. Examples of the communications network include the Internet, intranet, extranet, LAN, ISDN, VAN, CATV communications network, virtual private network, telephone network, mobile communications network, and satellite communications network. Further, a transmission medium that constitutes the communications network is not particularly limited. Examples of the transmission medium include (i) wired lines such as an IEEE 1394 cable, a USB cable, a power-line carrier, cable TV lines, telephone lines, and ADSL lines and (ii) wireless connections such as IrDA and remote control using infrared light, Bluetooth®, 802.11, HDR, mobile phone network, satellite connections, and terrestrial digital network.

The present invention is not limited to the description of the embodiments above, but may be altered by a skilled person within the scope of the claims. An embodiment based on a proper combination of technical means disclosed in different embodiments is encompassed in the technical scope of the present invention.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

The present invention makes it possible to prevent an erroneous input from being inputted at the time when a response is made to an incoming call in a mobile phone having a structure in which a touchscreen slides. Therefore, the present invention is suitably applied to a slide-type mobile phone, a PDA (Personal Digital Assistant), a communication device, a laptop personal computer, and other electronic devices.

### Reference Signs List

10 Mobile Phone
12 First Housing
14 Second Housing
20 Display Section
22 First Operation Section
24 Second Operation Section
26 Sound Input/Output Section
27 Slid State Detecting Section (Slid State Detecting Means)
28 State Detecting Section (State Detecting Means)
29 Inputting State Detecting Section (Inputting State Detecting Means)
30 Control Section (Control Means)
32 CPU
34 RAM
36 ROM
40 Storage Section
50 Phone Network Communication Section (Phone Network Communication Means)

## Claims

1. A mobile phone comprising:
a first housing including a first operation section;
a second housing to which the first housing is slidably connected;
slid state detecting means detecting a transition from a not-slid state in which the first housing is not slid with respect to the second housing to a slid state in which the first housing is slid with respect to the second housing;
inputting state detecting means detecting an inputting state in which an operation input is being made at the first operation section;
phone network communication means communicating with another phone via a phone network; and
control means invalidating the operation input from the first operation section, in a case where (i) the slid state detecting means detects the transition from the not-slid state to the slid state and (ii) the inputting state detecting means detects the inputting state, the transition and the inputting state being detected when the phone network communication means receives an incoming call from another phone.

2. The mobile phone as set forth in claim 1, wherein:
the control means causes the phone network communication means to carry out a process for responding to the incoming call, in a case where the inputting state detecting means does not detect the inputting state anymore after the operation input from the first operation section is invalidated.

3. The mobile phone as set forth in claim 1 or 2, wherein:
the control means causes the phone network communication means to carry out a process for rejecting the incoming call, in a case where the slid state detecting means does not detect the slid state anymore after the operation input from the first operation section is invalidated.

4. The mobile phone as set forth in any one of claims 1 to 3, wherein the first operation section is made of a touchscreen.

5. The mobile phone as set forth in claim 4, wherein the touchscreen is disposed so as to cover one entire surface of the first housing.

6. A method for controlling a mobile phone including a first housing including a first operation section and a second housing to which the first housing is slidably connected, the method comprising the steps of:
(a) detecting a transition from a not-slid state in which the first housing is not slid with respect to the second housing to a slid state in which the first housing is slid with respect to the second housing;
(b) detecting an inputting state in which an operation input is being made at the first operation section; and
(c) invalidating the operation input from the first operation section, in a case where (i) the transition from the not-slid state to the slid state is detected in the step (a) and (ii) the inputting state is detected in the step (b), the transition and the inputting state being detected when an incoming call is received from another phone.

7. A program for operating the mobile phone as set forth in any one of claims 1 to 5, the program causing a computer to function as each of the slid state detecting means, the inputting state detecting means, the phone network communication means and the control means.
